# EUROPEAN PATENT APPLICATION

(11) **EP 4 821 416 A1**
(43) Date of publication of application: **14.10.2026**
(21) Application number: 24899012.9
(22) Date of filing: 05.12.2024
(51) Int. Cl.: A47J 43/042, A47J 43/046, A47J 43/07

(54) **MIXING APPLIANCE FOR FOOD PREPARATIONS WITH BLADE LOCKING MECHANISM IN THE JUG**

(30) Priority: 08.12.2023 BR 102023025948
(71) Applicant: Seb Do Brasil Produtos Domésticos Ltda, 03108900 São Paulo (BR)
(72) Inventor: GOMES DE OLIVEIRA, Alessandro, 13299-414 Itupeva, SP (BR); ESPINOSA SILVA, Flavio, 05025-000 São Paulo, SP (BR)
(74) Representative: Cabinet Didier Martin
(86) International application number: PCT/BR2024/050567
(87) International publication number: WO 2025/118055

(57) **Abstract**

The present invention pertains to the field of apparatus or instruments for beating/mixing food, aiming to improve safety, facilitate the connection of the parts of the apparatus and extend the shelf life of the equipment. The present invention relates to an appliance comprising a base on which a pre-assembled assembly of jug and blade base is mounted. The jug has an open bottom in which the blade base is mounted. The base has at least one stop for locking the blade base, and the blade base has at least one fin to touch at least one stop upon rotation, wherein the direction of rotation for locking the blade base into the open bottom of the jug is opposite to the direction of rotation for locking the jug onto the base.

## Description

### Field of the Invention

The present invention belongs to the field of apparatus or instruments for blending/mixing food, aiming to improve their safety, facilitate the connection of the parts of the apparatus and extend the lifespan of the equipment.

### Introduction

The present invention relates to a mixing and blending appliance for liquid or pasty food preparations, these devices being commonly called a "blender".

The present invention relates more particularly to an appliance of the above-mentioned type comprising a removable blade set.

The main objective of the invention is to ensure the correct assembly and locking of its pieces, to ensure its correct operation in order to avoid unintentional disassembly during its use, improving its safety and increasing the lifespan of the equipment.

### State of the Art

Such appliances are well known in the state of the art; they traditionally comprise a jug, a blade set, a locking ring for locking the blade set to the jug and a motor base in which the pre-assembled assembly consisting of the jug, the blade assembly and the locking ring is engaged. The motor base comprises a motor that actuates a shaft provided with a coupling system that cooperates with a complementary coupling system on the blade assembly, during the engagement of the pre-assembled assembly on the motor base.

In some of these devices, safety problems are observed. Indeed, during rotation of the blade assembly driven at high speed by the motor, the locking ring can rotate concurrently with the blade assembly, which can have the effect of this locking ring being released from the jug at the moment when the user removes the jug after mixing a preparation.

Another existing problem happens during the movement for locking the jug on the body, because at this moment there is no mechanism that ensures the positioning of the blade base in the jug, often making the operation of the equipment possible even when the blade base is poorly positioned in the jug. Therefore, the liquid or pasty preparation can spread onto the motor base and damage itself or even generate the risk of electrocution to the user. When dealing with hot preparations, such as soups, the user can also suffer burns.

Documents FR 1 270 285, CN 2 657 555 U and CN 103099550A are known, which provide a locking of the locking ring on the motor base during the engagement of the pre-assembled assembly on this base. This avoids the unlocking of the locking ring during rotation of the blade assembly driven by the motor.

In document FR 1 270 285, the jug is screwed to the locking ring. This locking ring comprises, on its outer contour, a recess in which a protrusion arranged on the inner contour of a housing in the base engages, during the seating of the pre-assembled assembly in this housing. This blocks the rotation of the locking ring and of the jug screwed therein during rotation of the blade assembly.

In document CN 2 657 555 U, the jug is screwed to the locking ring. This locking ring has grooves on its outer contour, while the base has a housing that comprises chocks on its inner contour, the grooves and the chocks allowing the implementation of a bayonet locking system between the locking ring and the base.

In document CN 103099550A, the container is mounted to the locking ring by a first bayonet locking system. Furthermore, the locking ring itself is mounted to the base by a second bayonet locking system.

Some risks of disassembly of the locking ring in relation to the jug still remain with the devices described in documents FR 1 270 285, CN 2 657 555 U and CN 103099550A. Indeed, they do not protect the user against an unexpected disassembly of the locking ring in relation to the jug in cases where said user initially does not properly mount the locking ring to the jug.

Documents EP3624657 and EP3624656B1 present differences in the structure of the blade base and, in the locking movement of the jar, there is no mechanism that ensures the correct positioning of the blade base, which can cause the detachment of the blade base or leakage inside the equipment, besides being solutions that are much more complex than the one that will be proposed below.

In Document WO2019237880A1, despite presenting grooves to lock the blade base and the jug, connection and locking is not ensured by the rotation of the jug upon being locked onto the blender body.

The user can effectively thread the locking ring incorrectly onto the jug or incorrectly configure the bayonet locking system between the locking ring and the jug.

### Summary of the Invention

As seen above, the main disadvantage of the prior art resides in the fact that the coupling of the blade base onto the jug is visually correct, but operationally incomplete. Thus, the user is led to operate a deficient appliance.

The present invention resolves the disadvantages mentioned above because it ensures that the blade base is correctly positioned and properly locked when the jug locks onto the base of the appliance.

To solve the problems above, the present invention presents a mixing appliance for food preparations, equipped with locking mechanisms, a mechanism of stops and fins between the blade base and the base of the appliance, and with opposite locking directions, which ensures the correct locking of the blade base in the jug when the jug is locked onto the base of the appliance.

In a preferred embodiment, the blade base is locked onto the jug upon being rotated in a certain direction, and the assembly of the jug plus the blade base is locked onto the base of the appliance upon being rotated in a direction opposite to that of the locking of the blade base onto the jug. The blade base and the base of the appliance are equipped with stops and fins that ensure that the blade base is 100% locked at the end of the rotation movement for locking the jug onto the base of the blender. Therefore, first the blade base is mounted onto the jug by rotation and subsequently the jug (with the blade base coupled to it) is locked into the body of the blender, by rotation. Furthermore, the locking of the blade base onto the jug is such that after use, the blade base remains locked onto the jug even when the jug is uncoupled from the base of the blender, thus preventing leakage of the content of the jug. That is, the force necessary to remove the jug from the base is much smaller than the force necessary to remove the blade base from the jug.

As such, according to an embodiment of the present invention, the mixing and blending appliance for food preparations comprises:
- a jug with an open bottom,
- a blade base comprising a set of rotating blades and comprising at least one fin,
- a base comprising an actuation button, wherein the base presents at least one stop;
where:
- the blade base is configured to be coupled to the bottom of the jug by means of a first mounting system;
- the at least one fin of the blade base touches the stop of the base of the appliance; and
wherein the jug is locked onto the base by rotation and the direction of rotation for locking the blade base onto the jug is opposite to the direction of rotation for locking the jug onto the base, in order to ensure that the blade base is locked onto the jug when the jug is locked onto the base of the appliance.

Preferably, the direction of rotation for locking the blade base onto the jug is opposite to the direction of rotation of the blades.

Preferably, the blade base is first mounted onto the jug and, subsequently, the jug (with the blade base coupled thereto) is mounted onto the base.

Preferably, the contact between at least one stop and at least one fin occurs when the jug is rotated onto the base, locking the blade base completely onto the jug.

Preferably, the stop applies a force to the fin that is contrary to the rotation of the jug during the locking of the jug onto the base.

Preferably, the force exerted by the stops on the fins prevents rotation of the blade base in the same direction of rotation as the jug, allowing rotation of the blade base only in the locking direction and completely locks the blade base onto the jug.

Preferably, the base possesses at least two stops. More preferably, the base possesses two opposite stops.

Preferably, the blade base possesses at least two fins. More preferably, the blade base possesses two opposite fins. Even more preferably, the blade base possesses four fins that are spaced in a regular way around the coupling member.

Preferably, the base comprises a motor that drives the upper driving member.

Preferably, the border extends further below than the open bottom.

Preferably, the first mounting system comprises at least one hook in cooperation with at least one bayonet on the jug, and the second mounting system comprises at least one hook in cooperation with at least one bayonet on the jug. More preferably, the bayonets are provided on the internal face of the border.

In an alternative embodiment, the blade base possesses at least one stop while the base of the appliance possesses at least one fin.

Thus, once the jug is mounted onto the base, the stops of the base touch the fins of the blade base, preventing the rotation of the blade base along with the rotation of the jug during its circular locking movement onto the base, eliminating any existing gap from a poor positioning of the blade base in the jug and ensuring the locking of the blade base onto the jug when the jug is locked onto the base.

According to an embodiment of the present invention, the first mounting system of the blade base onto the jug can be of the thread or bayonet type. However, a screw-type mounting system can be considered, without departing from the scope of the invention.

According to an alternative embodiment of the present invention, the first mounting system, which couples the blade base onto the jug, comprises at least one hook, preferably four hooks, arranged on the outer contour of the blade base and at least one, preferably four, protruding element in the form of a tooth, popularly known as a bayonet on the inner contour of the jug to receive said hook by a rotational movement of the blade base in the jug.

Preferably, the first mounting system comprises at least two hooks on the outer contour of the blade base and at least two protruding elements on the inner contour of the jug arranged symmetrically. Each of the protruding elements engages, respectively, with one of the hooks. According to a preferred embodiment, the first mounting system comprises four protruding elements/bayonets and four hooks/slots uniformly distributed, respectively, on the outer contour of the blade base and on the inner contour of the cup. The four hooks/slots engage, respectively, with the four protruding elements/bayonets.

According to an embodiment of the present invention, the second mounting system of the jug onto the base of the blender can be of the thread or bayonet type. Likewise, a second screw-type mounting system can be considered, without departing from the scope of the invention. In the second mounting system the jug (containing the blade base) is connected onto the base of the blender, preferably threaded onto the base of the blender until the complete locking of the jug.

According to this embodiment, the second mounting system comprises at least one fin, preferably four fins, arranged on an outer contour of the blade base and at least one stop arranged on the base in the engagement region of the jug. According to a preferred embodiment, said at least one fin originates directly from the blade base. In a preferred embodiment, the second mounting system comprises two fins and two stops arranged symmetrically, respectively, on the inner contour of the base in the region of the zone of the blade base. This offers two possible positions for the pre-assembled assembly over the base. According to a preferred embodiment, the two fins are directly on the blade base.

During the rotational movement of the jug onto the base of the blender, the fins of the blade base touch the stops present on the base of the blender. Upon rotating the jug to perform its locking onto the base of the blender, the stops exert a force contrary to the rotational movement of the blade base, not allowing the blade base to rotate together with the jug. In this way, the blade base rotates in an opposite direction relative to the jug, eliminating any existing gap between the blade base and the jug, consequently, causing the blade base to complete 100% of its locking onto the jug. Upon finishing the locking of the jug onto the base of the blender, the assembly will be completely locked, preventing leakages during use and the runoff of fluid to the motor of the equipment, avoiding more serious accidents.

### Brief description of the drawings

Figure 1 illustrates a cross-sectional view of an embodiment of the appliance according to the invention.
Figure 2 illustrates a perspective view of the disassembled equipment, comprising the jug, the blade base and the body of the blender.
Figure 3 illustrates a configuration of the blade base according to the present invention.
Figure 4 illustrates a top view of a configuration of the base of the blender according to the present invention.
Figure 5 is a cross-sectional view taken along line C-C of the lower part of the jug already connected to the blade base, showing a gap until the final assembly and locking position;
Figure 6 illustrates a perspective view of the base of the blender assembled with the blade base, showing the relationship between the fins and the stops.
Figure 7 illustrates a cross-sectional view of the base of the blender, with the jug and blade base assembly already connected and locked in the correct operating position. The detail shows the correct lockings between the jug and the base, and the blade base and the jug, as well as the contact of the fins of the blade base with the stop of the base of the blender.
Figures 8A, 8B and 8C illustrate the steps of locking the blender jug onto the base and show the correct locking of the blade base in 8C.
Figure 9 is a more detailed view of Figure 8B, showing in detail the contact of the fin with the stop.
Figure 10 is a more detailed view of Figure 8C, showing in detail the contact of the fin with the stop and the correct positioning of the blade base in the jug.

### Detailed description of the invention

The following description details only some among the numerous ways of carrying out the present invention, such that it should not be viewed in a limiting manner. Any modifications and variants not described that do not depart from the spirit of the invention are part of the present invention.

The following description refers to an embodiment of the mixing and blending appliance for liquid or pasty, hot or cold food preparations, such as, for example, soups or milkshakes, this appliance being generally called a "blender". In the remainder of the description, the term "appliance" will be used.

In the remainder of the description, the same reference numerals are used to designate the same features, unless indicated otherwise.

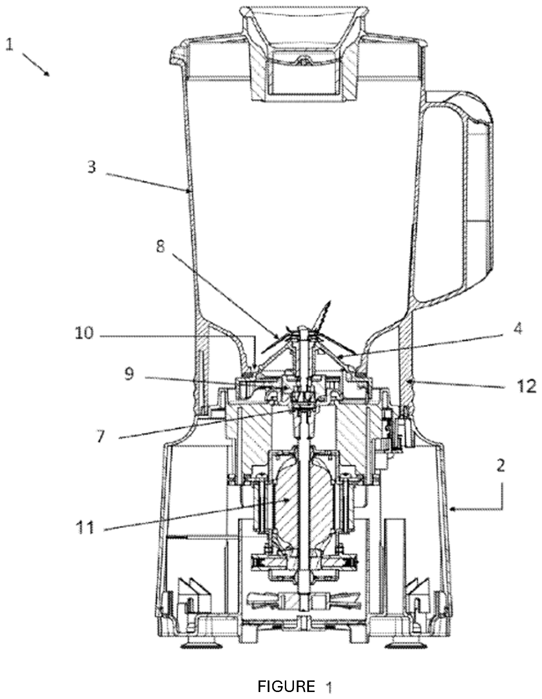

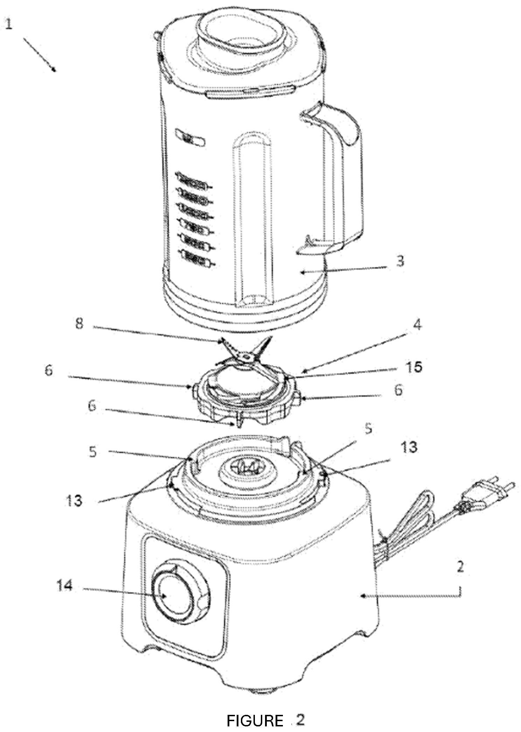

As illustrated in Figures 1 and 2, the appliance 1 comprises a base 2 upon which a pre-assembled assembly of jug 3 and blade base 4 is positioned. The jug 3 has an open bottom 10 in which the blade base 4 is engaged. This engagement is exemplified by the hook/bayonet system, wherein the blade base 4 possesses the hooks 15 and the jug 3 possesses the bayonets 16.

The base 2 comprises, in particular, a control button 14 that makes it possible to actuate a motor 11, which drives in rotation a first coupling piece 7, wherein the base 2 possesses at least one stop 5 to touch the fin 6 of the blade base 4.

The blade base 4 possesses at least one fin 6, and may have two fins 4, preferably possessing four fins 4, to touch at least one stop 5 when rotated, wherein when there is more than one fin 6, they are preferably arranged in a symmetrical manner, more preferably opposite to each other. The blade base 4 comprises blades 8 rotatably mounted, regularly spaced around a coupling member 9 fixed to the blades 8. Still in Figure 1, it is possible to observe that the jug 3 has a border 12 that surrounds the open bottom 10 of the jug 3, wherein the border 12 extends further below than the open bottom 10, which serves to lock the jug 3 onto the base 2 of the blender, through a hook/bayonet system, where the hook 13 is located on the base 2 and the bayonet is located on the inner part of the border 12.

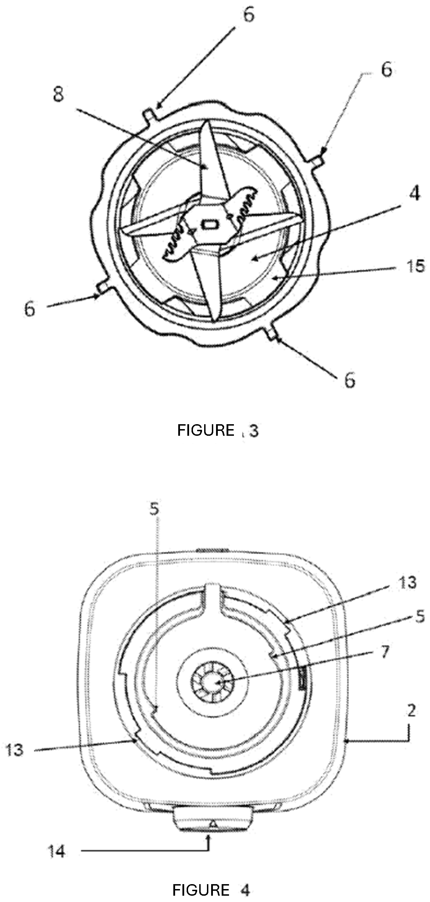

Figure 3 shows details of the blade base 4 according to an embodiment of the present invention. The blade base 4 features a plurality of blades 8 which are used to crush or mix food and at least one fin 6 which is used to touch the stop 5 of the base 2. The hook 15 is the contact region of the blade base 4 with the jug 3. For a correct operation of the appliance, it is necessary that the bayonet present on the jug 3 accommodates itself completely inside the hook 15 of the blade base 4, thus providing an efficient locking and preventing leakage of the content of the jug 3.

Figure 4 shows a top view of the base 2 of the blender, comprising the actuation button 14 to actuate the motor 11 (not shown), the coupling piece 7 driven by the motor 11, two hooks 13, and two stops 5.

The hook 13 is the engagement and movement space for the bayonet 16 of the internal face of the border 12 of the jug 3, which provides the locking of the jug 3 on the base 2. The complete accommodation of the bayonet 16 in the hook 13 indicates that the jug 3 is locked.

The stop 5 is intended to contact the fins 6 of the blade base 4, preventing the blade base 4 from rotating along with the jug 3 when the bayonet 16 of the jug 3 is not fully engaged with the hook 15 of the blade base 4.

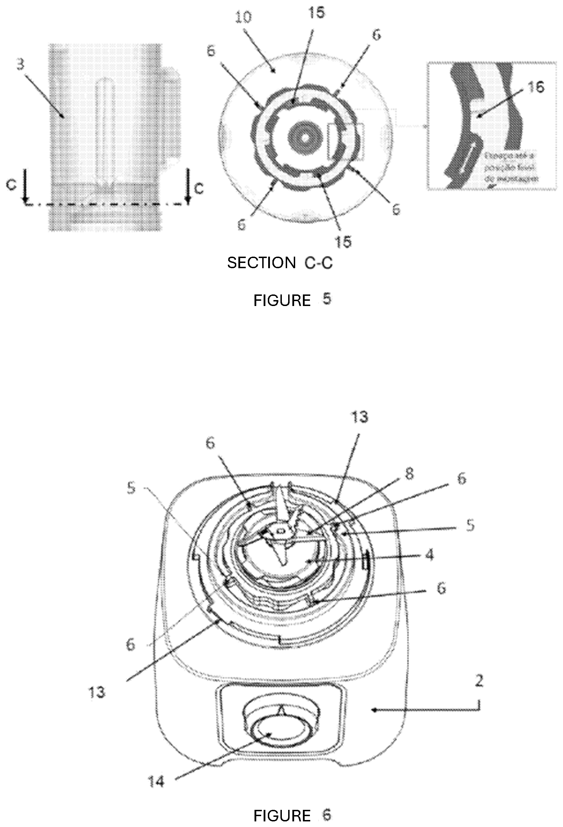

Figure 5 reveals the jug 3 plus blade base 4 assembly, after its assembly. The cross-sectional view taken along line C-C at the lower part of the jug 3 exemplifies an inefficient assembly of the blade base 4. The space highlighted by the detail does not provide proper locking of the blade base 4 onto the jug 3. Specifically, the bayonet 16 is not fully housed inside the hook 15. It is important to emphasize that the user gets the false impression that the blade base 4 is properly locked onto the jug 3, which will result in malfunction of the appliance, such as leakage of the jug content, damaging the equipment and compromising user safety. It is exactly this space highlighted in the detail of Figure 5 that the present invention aims to eliminate in an efficient and innovative way, ensuring an efficient locking in 100% of the operation.

Figure 6 shows how the blade base 4 must be correctly positioned on the base 2 after the locking of the jug 3 (not shown) onto the base 2 of the blender, comprising the actuation button 14 to actuate the motor 11, and two hooks 13. When the bayonet located on the inner part of the border 12 is housed in the hook 13, the jug 3 is locked onto the base 2 and any upward movement to remove the jug 3 from the base 2 is prevented. Furthermore, it is also possible to see that the stops 5 come into contact with the fins 6 of the blade base 4. Upon reaching this position, the blade base 4 rotates in a direction opposite to the direction of the locking of the jug 3 onto the base 2 when there is any gap between the contact of the blade base 4 and the jug 3.

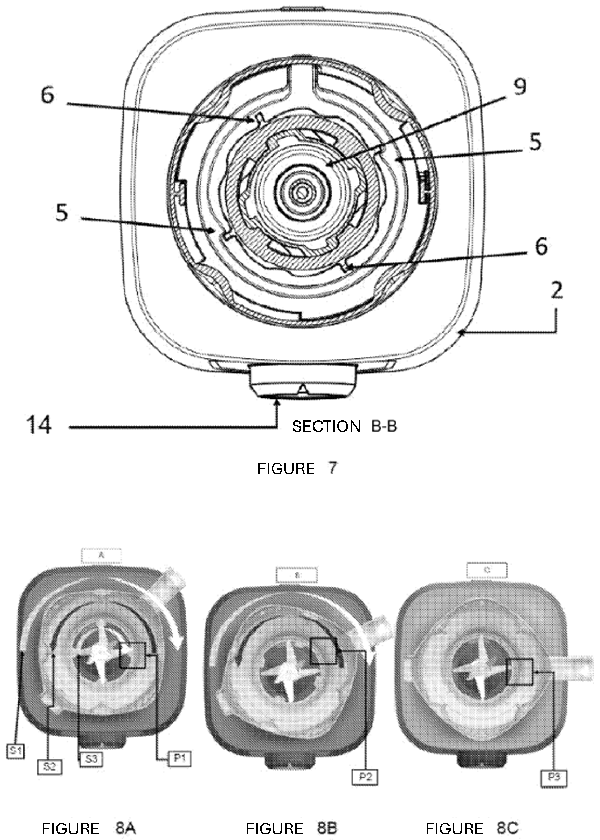

Figure 7 shows a cross-sectional view of the assembled and correctly locked appliance. The marked details highlight the correct positioning of the fins 6 with the stops 5, the contact of the blade base 4 with the contact surface of the jug 3. The housing of the fin of the jug 3 in the hook 13 is not visible in this figure. When all these contact points are present, there will be no leakage or any other risk to the user.

Figures 8A, 8B and 8C show the assembly steps of the jug 3 onto the base 2 of the appliance. In image 8A, S1 indicates the clockwise direction for locking the jug 3 onto the base 2, S2 indicates the counterclockwise direction for locking the blade base 4 onto the jug 3, and S3 indicates the clockwise direction of operation of the blades. It is also shown in P1 that the bayonet 16 is not fully housed inside the hook 15. As the jug 3 rotates over the base 2, the fins 6 touch the stops 5. This contact is highlighted in P2 in Figure 8B. Figure 8C shows the jug 3 already in its final locked position on the base 2. Observe in detail P3 that the bayonet 16 of the jug 3 is now fully housed in the hook 15 of the blade base 4 (see that the white surfaces of Figures 8A and 8B disappeared in 8C), indicating the complete locking of the system.

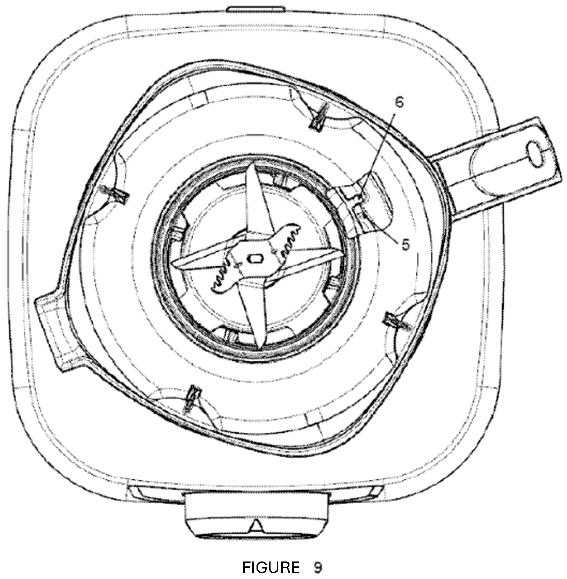

Figure 9 represents a schematic drawing with detailing of Figure 8B. It is possible to observe that the jug 3 was rotated in the clockwise direction until the fin 6 of the blade base 4 touched the stop 5. This contact prevents the blade base 4 from following the continuation of the rotation of the jug 3, causing the blade base 4 to rotate in the counter-clockwise direction relative to the jug 3, housing the bayonet 16 in the hook 15 and completely locking the blade base 4 onto the jug 3, eliminating the spacing left between the components, thus ensuring that the fluid present in the jug 3, during use of the appliance, does not leak or runoff to the internal part of the appliance, preventing it from reaching the motor and compromising user safety.

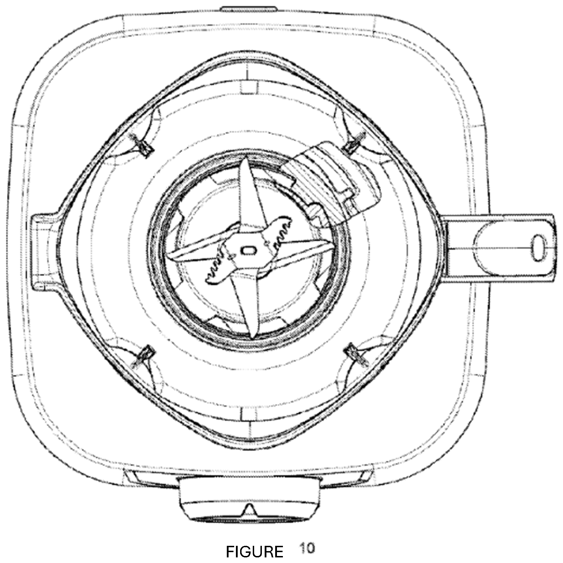

Figure 10 is a detailing of Figure 8C, wherein the jug 3 and the blade base 4 are correctly mounted on the base 2, with the bayonet 16 engaged with the hook 15, showing the contact points between the stop 5 and the fin 6, and the contact surface and the jug 3.

Additionally, the appliance also possesses a safety system that does not allow the appliance to start operating if the jug 3 is not completely locked onto the base 2, in the position shown in step C.

## Claims

1. A mixing appliance (1) for food preparations comprising:
• a jug (3) with an open bottom,
• a blade base (4) comprising an assembly of rotating blades (8) and comprising at least one fin (6),
• a base (2) comprising an actuation button (14), wherein the base presents at least one stop (5);
**characterized by**
• the blade base (4) being configured to be coupled to the bottom of the jug (3) by means of a first mounting system;
• the jug (3) being configured to be coupled to the base (2) by means of a second mounting system;
• the at least one fin (6) of the blade base (4) touching the stop (5) of the base (2) of the appliance,
and wherein the jug (3) is locked onto the base (2) by rotation and the direction of rotation for locking the blade base (4) onto the jug (3) is opposite to the direction of rotation for locking the jug (3) onto the base (2).

2. A mixing appliance (1), according to claim 1, **characterized by** the direction of rotation for locking the blade base (4) onto the jug (3) being opposite to the direction of rotation of the blades (8).

3. A mixing appliance (1), according to claim 1 or 2, **characterized by** the blade base (4) being first mounted onto the jug (3) and, subsequently, the jug (3) being mounted onto the base (2).

4. A mixing appliance (1), according to any of claims 1 to 3, **characterized by** the contact between at least one stop (5) and at least one fin (6), which occurs when the jug (3) is rotated onto the base (2), locking the blade base (4) completely onto the jug (3).

5. A mixing appliance (1), according to any one of claims 1 to 4, **characterized by** the stop (5) applying a force to the fin (6), wherein this force is contrary to the rotation of the jug (3) during the locking of the jug (3) onto the base (2).

6. A mixing appliance (1), according to any of claims 1 to 5, **characterized by** the force exerted by the stops (5) on the fins (6) preventing rotation of the blade base (4) in the same direction of rotation as the jug (3) and allowing rotation of the blade base (4) only in the locking direction and completely locking the blade base (4) onto the jug (3).

7. A mixing appliance (1), according to any of claims 1 to 6, **characterized by** the base (2) possessing at least two stops (5).

8. A mixing appliance (1), according to any of claims 1 to 7, **characterized by** the base (2) possessing two opposite stops (5).

9. A mixing appliance (1), according to any of claims 1 to 7, **characterized by** the blade base (4) possessing at least two fins (6).

10. A mixing appliance (1), according to any of claims 1 to 8, **characterized by** the blade base (4) possessing two opposite fins (6).

11. A mixing appliance (1), according to any of claims 1 to 10, **characterized by** the blade base (4) possessing four fins (6) that are spaced in a regular way around the coupling member (9).

12. A mixing appliance (1), according to any of claims 1 to 11, **characterized by** the base (2) comprising a motor (11) that drives the upper driving member (7).

13. A mixing appliance (1), according to any of claims 1 to 12, **characterized by** the border (12) extending further below than the open bottom (10).

14. A mixing appliance (1), according to any of claims 1 to 13, **characterized by** the first mounting system comprising at least one hook (15) in cooperation with at least one bayonet (16) on the jug (3).

15. A mixing appliance (1), according to any of claims 1 to 14, **characterized by** the second mounting system comprising at least one hook (13) in cooperation with at least one bayonet on the jug (3).

16. A mixing appliance (1), according to any of claims 1 to 15, **characterized by** the bayonets being provided on the internal face of the border (12).
